# EUROPÄISCHE PATENTSCHRIFT

(11) **EP 1 927 186 B1**
(45) Veröffentlichungstag und Bekanntmachung des Hinweises auf die Patenterteilung: **20.01.2010**
(21) Anmeldenummer: 05791228.9
(22) Anmeldetag: 22.09.2005
(51) Int. Cl.: H02M 7/757, H02J 3/36

(54) **REGELUNGSVERFAHREN FÜR EINE GLEICHSTROMÜBERTRAGUNG MIT MEHREREN STROMRICHTERN**
CONTROL METHOD FOR DIRECT CURRENT TRANSMISSION BY MEANS OF SEVERAL POWER CONVERTERS
PROCEDE DE REGLAGE POUR UNE TRANSMISSION DE COURANT CONTINU A L'AIDE DE PLUSIEURS CONVERTISSEURS DE COURANT

(43) Veröffentlichungstag der Anmeldung: 04.06.2008
(73) Patentinhaber: SIEMENS AKTIENGESELLSCHAFT, 80333 München (DE)
(72) Erfinder: KARLECIK-MAIER, Franz, 91315 Höchstadt (DE)
(86) Internationale Anmeldenummer: PCT/DE2005/001708
(87) Internationale Veröffentlichungsnummer: WO 2007/033619

(56) Entgegenhaltungen:
- DE-C1- 19 544 777
- US-A- 4 419 591

## Beschreibung

Die vorliegende Erfindung betrifft ein Verfahren zum Regeln von wenigstens drei Stromrichtern, die als Gleichrichter oder Wechselrichter regelbar und über ein Gleichstromnetz miteinander verbunden sind, im Bereich der Energieverteilung und - übertragung.

Ein solches Verfahren ist beispielsweise aus der DE 195 44 777 C1 bereits bekannt. Das dort beschriebene Verfahren dient zur Regelung eines so genannten Hochspannungsgleichstromübertragungssystems, das aus mehreren Stromrichtern besteht, wobei die Stromrichter wahlweise als Wechselrichter oder Gleichrichter betrieben werden können. Dabei sind die Stromrichter über ein Gleichstromnetz miteinander verbunden. Zur Kopplung der Stromrichter mit einem jeweils zugeordneten E-nergieverteilungsnetz sind Transformatoren vorgesehen. Bei der Regelung der Gleich- oder Wechselrichter werden die Gleichströme und Gleichspannungen an den jeweiligen Stromrichtern als Messgrößen erfasst. Ferner werden für jeden Stromrichter Sollwertepaare in Form von Sollstrom und Sollspannung festgelegt. Jede Regelung berechnet eine diesbezügliche Regelabweichung, bildet also mit andern Worten die Differenz zwischen Mess- und Sollwerten. Die Regelung der Gleichrichter erfolgt so, dass die Summe der Regelabweichungen minimal wird. Der Wechselrichter wird hingegen so geregelt, dass die Differenz der Regelabweichungen minimal wird. Nachteilig bei dem vorbekannten Verfahren ist, dass eine übergeordnete Regelungsebene erforderlich ist. Eine hierarchische Regelungsstruktur ist jedoch aufwändig und kann zu unerwünschten Instabilitäten führen.

Aufgabe der vorliegenden Erfindung ist es daher ein Verfahren der eingangs genannten Art bereitzustellen, das eine einfache Struktur aufweist und gleichzeitig zuverlässig stabil arbeitet.

Die Erfindung löst diese Aufgabe durch ein Verfahren, bei dem an jedem Stromrichter jeweils eine Messgleichspannung und jeweils ein Messgleichstrom gemessen und an eine Gleichrichterregelung zur Regelung des jeweiligen Gleichrichters oder an eine Wechselrichterregelung zur Regelung eines jeweils zugeordneten Wechselrichters übertragen werden, für jede Gleichrichterregelung und für jede Wechselrichterregelung eine jeweils zugeordnete Gleichrichtersollgleichleistung beziehungsweise Wechselrichtersollgleichleistung festgelegt wird, wobei die Summe aus allen Gleichrichtersollgleichleistungen und allen Wechselrichtersollgleichleistungen gleich Null ist, aus jeder Wechselrichtersollgleichleistung eine jeweils zugeordnete Wechselrichtersollgleichspannung bestimmt wird, die kleinste Wechselrichtersollgleichspannung aller am Gleichstromnetz angeschlossener Wechselrichter als Minimalgleichspannung festgelegt wird, mittels der Minimalgleichspannung aus jeder Gleichrichtersollgleichleistung und aus jeder Wechselrichtersollgleichleistung ein Gleichrichtersollgleichstrom beziehungsweise ein Wechselrichtersollgleichstrom berechnet werden, wobei jede Gleichrichterregelung die Differenz zwischen der Minimalgleichspannung und der jeweils empfangenen Gleichrichtermessgleichspannung unter Gewinnung einer Gleichrichterdifferenzgleichspannung und die Differenz zwischen dem jeweiligen Gleichrichtersollstrom und dem jeweils empfangenen Gleichrichtermessgleichstromes unter Gewinnung eines Gleichrichterdifferenzgleichstromes bildet und den zugeordneten Gleichrichter so regelt, dass die Summe der Differenzgleichspannung und des Differenzgleichstroms minimal wird, und wobei jede Wechselrichterregelung die Differenz zwischen der Minimalgleichspannung und der jeweils empfangenen Wechselrichtermessgleichspannung unter Gewinnung einer Wechselrichterdifferenzgleichspannung und die Differenz zwischen dem jeweiligen Wechselrichtersollstrom und dem jeweils empfangenen Wechselrichtermessgleichstrom unter Gewinnung eines Wechselrichterdifferenzgleichstromes bildet und den jeweils zugeordneten Wechselrichter so.regelt, dass die Differenz zwischen dem Wechselrichterdifferenzgleichstrom und der Wechselrichterdifferenzgleichspannung minimal wird.

Erfindungsgemäß wird sowohl eine hierarchische Struktur des Regelverfahrens als auch eine Regelablösung grundsätzlich vermieden.

Die Festlegung der Leistungssollwerte für die Regelungen der Stromrichter erfolgt beispielsweise durch eine zentrale Leitstelle, wobei die Leistungssollwerte von der Leitstelle über eine zweckmäßige Datenübertragungen an die einzelnen Reglungen übertragen werden. Eine übergeordnete Regelung, die in bestimmten zuvor festgelegten Situationen aktiv in die Regelung eingereift, wie dies aus dem Stand der Technik bekannt geworden ist, wird jedoch erfindungsgemäß vermieden. Die Leitstelle legt lediglich die notwendigen Leistungssollwerte fest. An die Stelle der zentralen übergeordneten Regelung tritt vielmehr die Auswahl der kleinsten Wechselrichtersollgleichspannung und die Verwendung der ausgewählten Minimalgleichspannung als Sollgleichspannung bei allen Regelungen der Stromrichter. Zu hohe Gleichspannungen auf der Gleichspannungsseite der Stromrichter werden auf diese Weise vermieden, so dass eine übergeordnete Regelung.erfindungsgemäß entfallen kann. Das erfindungsgemäße Verfahren ist daher dezentral, dynamischer, aufwandsärmer und stabiler als die aus dem Stand der Technik bekannten Verfahren. Vorzugsweise erfolgt die Auswahl der kleinsten Wechselrichtersollgleichspannung dezentral, also bei jeder Regelung separat.

Es sei darauf hingewiesen, dass die Messwerte beispielsweise mittels Stromwandler beziehungsweise Spannungswandler erfasst werden, deren Ausgangssignal einer überwachten Gleichspannung, beispielsweise 500 kV, beziehungsweise einem von dieser Gleichspannung getriebenen Gleichstrom, beispielsweise 3000 A, jeweils proportional ist. Das Ausgangssignal des Stromwandlers beziehungsweise des Spannungswandlers werden schließlich durch eine Abtasteinheit unter Gewinnung von Abtastwerten abgetastet und die Abtastwerte über einen Analog-Digitalwandler in digitale Messwerte umgewandelt. Mit anderen Worten handelt es sich bei der Messgleichspannung und dem Messgleichstrom beispielsweise um digitale Messwerte, die der jeweiligen Regelung zugeführt und von dessen Software weiterverarbeitet werden.

Vorteilhafterweise erfolgt die Regelung jedes Gleichrichters und jedes Wechselrichters über den gesamten Arbeitbereich des Gleichrichters beziehungsweise des Wechselrichters hinweg sowohl auf der Grundlage des jeweils zugeordneten Gleichrichterdifferenzgleichstromes als auch auf der Grundlage der Gleichrichterdifferenzgleichspannung beziehungsweise auf der Grundlage des jeweils zugeordneten Wechselrichterdifferenzgleichstromes als auch auf der Grundlage der zugeordneten Wechselrichterdifferenzgleichspannung. Eine wie auch immer ausgestaltete Begrenzung der Regelung auf die Summe oder die Differenz aus Differenzgleichstrom und Differenzgleichspannung entfällt gemäß dieser zweckmäßigen Weiterentwicklung. Eine Regelablösung ist daher vermieden und die Stabilität des Verfahrens noch weiter erhöht.

Vorteilhafterweise sind die Stromrichter unter Ausbildung einer Kurzkupplung räumlich nebeneinander aufgestellt. Die so ausgebildete Kurzkupplung dient beispielsweise zur Kopplung von mehreren Wechselspannungsnetzen.

Bei einer hiervon abweichenden Weiterentwicklung der Erfindung sind die Stromrichter unter Ausbildung eines Gleichstromfernübertragungssystems wenigstens 1 km entfernt voneinander aufgestellt. Gemäß dieser Weiterentwicklung des erfindungsgemäßen Verfahrens ist eine Fernübertragung elektrischer Leistung zwischen mehr als zwei Stromrichtern als klassisches Anwendungsgebiet eines Gleichstromübertragungssystems ermöglicht. Dabei sind die Stromrichter in der Regel über mehrere hundert Kilometer getrennt voneinander aufgestellt und über eine entsprechend lange Gleichstromverbindung miteinander verbunden und zu einem Gleichstromnetz vermascht und gekoppelt. Auf diese Weise ist eine Leistungsübertragung zwischen mehreren Netzpunkten über längere Strecken mit geringen Verlusten ermöglicht.

In einem Ausführungsbeispiel übermittelt eine Leitstelle die vom Anwender des erfindungsgemäßen Verfahrens festgelegten Sollgleichleistungen mit Angabe der Betriebsart als Gleich- oder Wechselrichter an die jeweils zugeordnete Regelung der Stromrichter, wobei jede Regelung über Mittel verfügt, welche aus der übermittelten Sollgleichleistung die Wechselrichtungssollgleichspannung bestimmen. Solche Mittel sind beispielsweise Funktionsgeber mit einer Kennlinie, deren Verlauf von dem Aufbau und der Konfiguration des jeweiligen Stromrichters und der gesamten Anlage sowie von Erfahrungswerten abhängig ist. Die Wechselrichterregelungen senden die von ihnen ermittelte Sollgleichspannung über eine Datenfernübertragung an die übrigen Regelungen.

Bei der mit der erfindungsgemäßen Weiterentwicklung durchführbaren Gleichstromfernübertragung werden die jeweils benötigten Sollwerte, wie beispielsweise die jeweilige Sollgleichspannung mittels Datenfernübertragungsmitteln zwischen den Stromrichtern ausgetauscht. Zweckmäßige Datenfernübertragungsmittel umfassen sowohl leitungsgeführte Übertragungsmittel, wie beispielsweise das Internet oder die Kommunikation über Hochspannungsleitungen, als auch nicht geführte Übertragungsmittel, wie beispielsweise Funkgeräte oder dergleichen.

Zweckmäßigerweise weisen der Gleichrichter und der Wechselrichter jeweils eine Brückenschaltung aus Thyristorventilen auf. Thyristorventile arbeiten im Vergleich zu anderen Leistungshalbleiterventilen verlustarm und kommen insbesondere bei der Hochspannungsgleichstromübertragung zum Einsatz.

Zweckmäßigerweise wird jeder auf einen Nennstrom normierte Gleichrichtermessgleichstrom auf den jeweils zugeordneten ebenfalls auf den Nennstrom normierten Gleichrichtersollgleichstrom, jeder auf den Nennstrom normierte Wechselrichtermessgleichstrom auf den jeweils zugeordneten und ebenfalls auf den Nennstrom normierten Wechselrichtersollgleichstrom umnormiert und sowohl jede auf die Nennspannung normierte Gleichrichtermessgleichspannung und jede auf die Nennspannung normierte Wechselrichtermessgleichspannung wird auf die Minimalspannung umnormiert, wobei jeder Gleichrichterdifferenzgleichstrom und jeder Wechselrichterdifferenzgleichstrom als Differenz zwischen 1 und den auf diese Weise umnörmierten jeweils zugeordneten Gleichrichtermessgleichstrom beziehungsweise Wechselrichtermessgleichstrom und die Gleichrichterdifferenzgleichspannung und die Wechselrichterdifferenzgleichspannung als Differenz zwischen 1 und der auf diese Weise umnormierten jeweils zugeordneten Gleichrichtermessgleichspannung beziehungsweise Wechselrichtermessgleichspannung berechnet wird. Gemäß dieser vorteilhaften Weiterentwicklung wird unter Beibehaltung der geforderten Übertragungsleistung, also der Sollgleichleistung, eine Umnormierung der Werte vorgenommen. Durch diese Umnormierung ergeben sich insbesondere Vorteile im Schwachlastbetrieb. So tritt bei dem Marginalstromverfahren gemäß dem Stand der Technik selbst bei starken Wechselspannungsnetzen, also bei Wechselspannungsnetzen mit einem hohen so genannten Short Circuit Ratio, dem Verhältnis der Netzkurzschlussleistung zur Nennleistung des Gleichstromübertragungssystems, ein nachteiliges Regelverhalten im Schwachlastbereich auf. Ein hohes Short Circuit Ratio liegt beispielsweise bei 5. Die erfindungsgemäße Weiterentwicklung ermöglicht hingegen selbst im Schwachlastbereich ein schnelles Anfahren der gewünschten Arbeitspunkte.

Vorteilhafterweise wird an jedem Wechselrichter ein Messlöschwinkel gemessen und an eine jeweils zugeordnete Gammaregelung übertragen, wobei die Gammaregelung den Messlöschwinkel mit einem dem Wechselrichter zugeordneten Solllöschwinkel, vergleicht und, wenn der jeweilige Messlöschwinkel den zugeordneten Solllöschwinkel unterschreitet, einen gegenüber der vorgegebenen Wechselrichtersollgleichspannung herabgesetzten Wechselrichtergleichspannungssollwert erzeugt, wobei der herabgesetzte Wechselrichtergleichspannungssollwert an alle anderen Wechselrichterregelungen und an alle Gleichrichterregelungen übertragen und zur Bestimmung der Minimalgleichspannung verwendet wird. Gemäß dieser Weiterentwicklung der Erfindung ist eine Gammaregelung bereitgestellt, um Kommutierungsfehler beim Zünden der Stromrichterventile jedes Wechselrichters sicher zu vermeiden. Im Gegensatz zum Stand der Technik wird jedoch eine konkurrierende Regelung unter Einsatz einer Minimal- oder Maximalauswahl zwischen einer Gammaregelung und beispielsweise einer Stromregelung im Rahmen der Erfindung vermieden. Die Gammaregelung ist erfindungsgemäß im Normalbetrieb der zu regelnden Anlage nicht wirksam. Ein Gammaregler der Gammaregelung verharrt dazu beispielsweise auf der von einem Benutzer des Verfahrens eingestellten Wechselrichtersollgleichspannung. Hierzu wird der Gammaregler beispielsweise nach oben auf diese eingestellte Wechselrichtersollgleichspannung begrenzt. Kommt es zur Unterschreitung des eingestellten Solllöschwinkels wird von der Gammaregelung hingegen eine gegenüber der ursprünglich eingestellten Wechselrichtersollgleichspannung verringerte oder herabgesetzte Wechselrichtersollgleichspannung als Wechselrichtergleichspannungssollwert bestimmt, die dann zur Bestimmung der Minimalgleichspannung verwendet wird. Hierzu wird die Wechselrichtergleichspannungssollwert vorteilhafterweise an alle Regelungen gesendet. Der Gammaregler weist zweckmäßigerweise auch eine untere Regelungsbegrenzung auf, die sicherstellt, dass die herabgesetzte Wechselrichtersollgleichspannung einen unteren Schwellenwert nicht unterschreitet.

Gemäß einer weiteren vorteilhaften Weiterentwicklung der Erfindung weist jede Gleichrichterregelung einen Begrenzungsregler auf, der einen Gleichrichterregler dieser Gleichrichterregelung nach oben begrenzt, so dass ein vorgegebener Maximalstrom und/oder eine vorgegebene Maximalspannung nicht überschritten werden. Die beispielsweise im Fehlerfall durchgreifende Begrenzung dient zur Sicherheit der geregelten Anlagen und zur zusätzlichen Stabilisierung des erfindungsgemäßen Verfahrens.

Gemäß einer diesbezüglich zweckmäßigen Weiterentwicklung begrenzt der Begrenzungsregler den zugeordneten Gleichrichterregler, wenn der jeweils empfangene Gleichrichtermessgleichstrom größer ist als die Summe aus dem jeweiligen Gleichrichtersollgleichstrom und einer vorbestimmten dem Gleichrichter jeweils zugeordneten Differenzgleichstromabweichung oder wenn die jeweils empfangene Gleichrichtermessgleichspannung größer ist als die Summe aus der Minimalgleichspannung und einer vorbestimmten Differenzgleichspannungsabweichung. Die Differenzgleichstromabweichung und die Differenzspannungsabweichung ermöglichen das Einrichten eines beliebigen Toleranzbereiches, in dem ein Abweichen des jeweiligen Messwertes von dem zugeordneten Sollwert erlaubt ist, ohne dass die weiter oben beschriebene Begrenzung der Gleichrichterregelung eingreift.

Gemäß einer zweckmäßigen Weiterentwicklung wird bei abfallender Gleichrichtermessgleichspannung und/oder Wechselrichtermessgleichspannung die Gleichrichtersollgleichleistung beziehungsweise die Wechselrichtersollgleichleistung in Abhängigkeit der jeweiligen Gleichrichtermessgleichspannung beziehungsweise in Anhängigkeit der jeweiligen Wechselrichtermessgleichspannung auf einen kleineren Wert unter Gewinnung einer jeweils zugeordneten Fehlerfallsollgleichleistung herabgesetzt, wobei der Gleichrichtersollgleichstrom beziehungsweise der Wechselrichtersollgleichstrom anstatt aus der Gleichrichtersollgleichleistung beziehungsweise Wechselrichtersollgleichleistung aus der jeweiligen Fehlerfallsollgleichleistung bestimmt wird. Das Herabsetzen der Sollgleichleistung dient zur Regelung des Gleichstromübertragungssystems im Fehlerfall, in dem beispielsweise ein Spannungseinbruch in einem der Wechselspannungsnetze oder im Gleichstromkreis vorliegt.

Gemäß einer diesbezüglich zweckmäßigen Weiterentwicklung erfolgt das Festlegen der Fehlerfallsollgleichleistung unter Verwendung eines Funktionsgebers, der mit einer auf Erfahrungswerten beruhenden Kennlinie versehen ist. Dabei wird die Messgleichspannung zweckmäßigerweise geglättet und dem Funktionsgeber zugeführt. Die Glättung der Messgleichspannung ist in der Regel notwendig, da die Messgleichspannung im Fehlerfall stark schwanken kann. Der Funktionsgeber erzeugt in Abhängigkeit der geglätteten Messgleichspannung eine Fehlerfallbegrenzungsleistung. Diese dient zweckmäßigerweise zur Begrenzung des Ausgangswertes eines Integrators nach oben hin, wobei der Ausgangswert des Integrators die Fehlerfallsollgleichleistung ist. Der Ausgang des Integrators wird zur Bestimmung der Sollgleichspannung und des Sollgleichstromes verwendet. Im Normalbetrieb ist der Ausgangswert des Integrators gleich der vom Benutzer eingestellten Sollgleichleistung, mit anderen Worten ist die Fehlerfallbehandlung im Normalbetrieb inaktiv. Fällt die jeweilige Messgleichspannung hingegen unter einen vorbestimmten Schwellenwert, erzeugt der Funktionsgeber eine gegenüber der Sollgleichleistung reduzierte Fehlerfallbegrenzungsleistung. Diese ist dann zunächst der Ausgangswert des Integrators und somit gleichzeitig die Fehlerfallsollgleichleistung. Steigt die geglättete Messgleichspannung am Eingang des Funktionsgebers an, erzeugt dieser eine erhöhte Fehlerfallbegrenzungsleistung als obere Begrenzung des Integrators. Der Integrator integriert dann auf die erhöhte Fehlerfallbegrenzungsleistung mit einer beispielsweise einstellbaren Integrationsgeschwindigkeit hoch. Bei einem bevorzugten Ausführungsbeispiel wird die Integrationsgeschwindigkeit von der Art und der Höhe der Schwankung der Messgleichspannung abhängig gemacht. Dabei dient die Schwankung der Messgleichspannung als Hinweis darauf, ob ein beliebiger Fehler immer noch vorliegt oder bereits beseitigt wurde.

Das erfindungsgemäße Verfahren ist sowohl für die Hochspannungsgleichstromübertragung, die Mittelspannungsgleichstromübertragung als auch für die Niederspannungsgleichstromübertragung geeignet.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleich Bezugszeichen auf gleich wirkende Bauteile verweisen und wobei
- Figur 1: ein Ausführungsbeispiel des erfindungsgemäßen Verfahrens an Hand eines mehrere Stromrichter aufweisenden Hochspannungsgleichstromfernübertragungssystems verdeutlicht und
- Figur 2: eine Detailansicht der Anlage gemäß Figur 1 zur Verdeutlichung einer Fehlerfallbegrenzung eines Ausführungsbeispiels des erfindungsgemäßen Verfahrens zeigen.

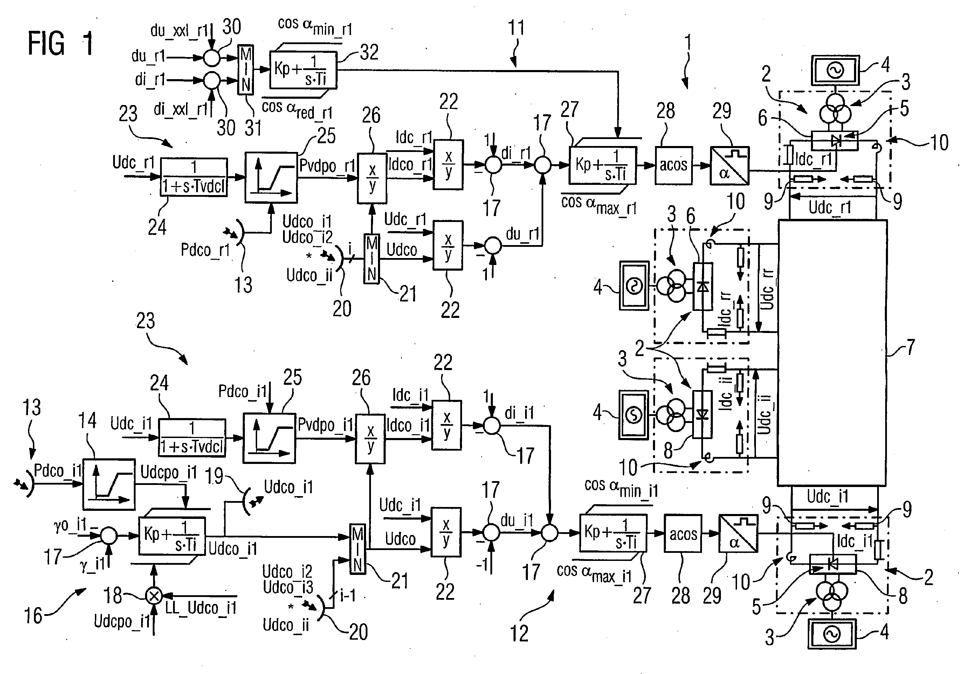

Figur 1 verdeutlicht ein Ausführungsbeispiel des erfindungsgemäßen Verfahrens in einer schematischen Darstellung. So ist ein so genanntes Multi-Terminal- Hochspannungsgleichstromübertragungs-(MT-HGÜ)-System 1 mit mehreren Stromrichtern 2 gezeigt, zu deren Regelung das gezeigte Ausführungsbeispiel des erfindungsgemäßen Verfahrens vorgesehen ist. Das MT-HGÜ-System 1 umfasst für jeden Stromrichter 2 einen Netzanschlusstransformator 3, der zur Kopplung des jeweiligen Stromrichters 2 mit einem Wechselspannungsnetz 4 vorgesehen sind. Dabei weist jeder Netzanschlusstransformator 3 eine galvanisch mit dem Wechselspannungsnetz 4 verbundene Primärwicklung auf, die induktiv mit zwei Sekundärwicklungen des Netzanschlusstransformators 3 verbunden ist. Die Sekundärwicklungen der Netzanschlusstransformatoren stellen einen unterschiedlichen Phasenversatz bereit, so dass ein so genanntes 12-Puls-HGÜ-System 1 mit mehreren Stromrichtern 2 realisiert ist. 12-Puls-MT-HGÜ-Systeme sind dem Fachmann auf diesem Gebiet bestens bekannt, so dass an dieser Stelle hierauf nicht näher eingegangen zu werden braucht.

Die Sekundärwicklungen der Netzanschlusstransformatoren 3 sind jeweils mit einer Brückenschaltung aus Thyristorventilen 5 verbunden, die in Figur 1 nur schematisch verdeutlicht sind. Solche Brückenschaltungen sind ebenfalls bestens bekannt. Eine genauere Beschreibung ist daher hier ebenfalls überflüssig. Die Brückenschaltung aus Thyristorventilen 5 ist in dem gezeigten Ausführungsbeispiel gemäß Figur 1 so geregelt, dass mehrere Gleichrichter 6 realisiert sind. Die Gleichrichter 6 sind über ein Gleichstromnetz 7 mit mehreren Wechselrichtern 8 verbunden, wobei der Gleichstromkreis 7 über Widerstände 9 an den Stromrichtern 2 geerdet ist. Zur Glättung des Gleichstromes sind Glättungsdrosseln 10 vorgesehen, die in die Anbindung jedes Stromrichters 2 an das Gleichstromnetz 7 geschaltet sind. Selbstverständlich kann jeder Stromrichter 2 sowohl als Wechselrichter als auch als Gleichrichter betrieben werden.
Jeder Gleichrichter 6 und jeder Wechselrichter 8 verfügt über Stromwandler, die zum Erfassen eines in der am zugeordneten Gleichrichter 6 fließenden Gleichstromes beziehungsweise eines am zugeordneten Wechselrichter 8 fließenden Gleichstromes eingerichtet sind. Die Stromwandler erzeugen an ihrem Ausgang ein Signal, das zu dem Gleichrichter 6 beziehungsweise dem Wechselrichter 8 fließenden Gleichstrom proportional ist. Durch Einsatz geeichter Geräte ist aus dem Messsignal der Gleichstrom bestimmbar. Das Messsignal wird unter Gewinnung von Abtastwerten mittels einer Abtasteinheit abgetastet und die Abtastwerte unter Gewinnung von Messgleichstromwerten durch einen Analog/Digital-Wandler digitalisiert, wobei die Messgleichstromwerte der Gleichrichter als Gleichrichtermessgleichstrom Idc_{_}rr und die Messgleichstromwerte der Wechselrichter als Wechselrichtermessgleichstrom Idc_{_}ii bezeichnet werden. Ein der an jedem Gleichrichter 6 abfallenden Gleichspannung proportionales Messsignal wird an den Widerständen 9 erfasst. Auch dieses Signal wird abgetastet und digitalisiert, wobei sich digitale Messgleichspannungswerte ergeben, die hier als Gleichrichtermessgleichspannung Udc_rr beziehungsweise als Wechselrichtermessgleichspannung Udc_ii bezeichnet sind.

Bei dem MT-HGÜ-System 1 sind der Gleichrichter 6 und der Wechselrichter 8 mehrere Kilometer entfernt voneinander aufgestellt.

Zur Regelung der Stromrichter 2 sind Stromrichterregelungen vorgesehen, wobei jeder Gleichrichter eine Gleichrichterregelung 11 und jeder Wechselrichter 8 eine Wechselrichterregelung 12 aufweist. Aus Gründen der Übersichtlichkeit sind in Figur 1 nur eine Gleichrichterregelung 11 und eine Wechselrichterregelung 12 gezeigt.

Für jeden Gleichrichter 6 und für jeden Wechselrichter 8 wird jeweils eine Gleichrichtersollgleichleistung Pdco_r1...Pdco_rr beziehungsweise eine Wechselrichtersollgleichleistung Pdco_i1...dco_ii durch eine figürlich nicht dargestellte Leitstelle festgelegt. Von der Leitstelle werden die Sollgleichleistungen an einen Funkempfänger 13 des jeweiligen Stromrichters 2 gesendet.

Im Folgenden wird zunächst auf die Wechselrichterregelung 12 eingegangen. Bei jeder Wechselrichterregelung 12 wird die von dem Funkempfänger 13 empfangene Wechselrichtersollgleichleistung Pdco_i1 einem Funktionsgeber 14 zugeführt. Der Funktionsgeber 14 weist eine Kennlinie auf, mit deren Hilfe in Abhängigkeit der empfangenen Wechselrichtersollgleichleistung Pdco_i1 eine Wechselrichtersollgleichspannung Udcpo_i1 ermittelt wird. Der Verlauf der Kennlinie des Funktionsgebers ist abhängig von der Struktur, dem Aufbau und der Konfiguration der HGÜ-Anlage und basiert ferner auf Erfahrungswerten.

Die mit Hilfe des Funktionsgebers 14 berechnete Wechselrichtersollgleichspannung Udcpo_i1 dient als obere Begrenzung für einen Gamma-PI-Regler 15 einer Gammaregelung 16, die figürlich nicht dargestellte Mittel aufweist, um einen Messlöschwinkel γᵢ₁ für den zugeordneten Wechselrichter 8 zu bestimmen. Ferner verfügt die Gammaregelung 16 über einen Solllöschwinkel γ_{0_i1}, der an dem Negativeingang des Addierers 17 anliegt und mit anderen Worten von dem Messlöschwinkel γᵢ₁ abgezogen wird. Die Gammaregelung 16 umfasst neben dem Addierer 17, den besagten Gamma-PI-Regler 15 sowie einen Multiplikator 18. Der Multiplikator 18 dient zur Festlegung der unteren Begrenzung des Gammareglers 15 aus der Wechselrichtersollgleichspannung Udcpo_i1, wobei Udcpo_i1 mit einem ebenfalls vorgegebenen Faktor LL_Udco_i1 multipliziert wird. In dem gezeigten Ausführungsbeispiel ist der Faktor LL_Udco_i1 gleich 0,7.Demnach ist der Gammaregler 15 nach oben auf die Wechselrichtersollgleichspannung Udcpo_i1 und nach unten auf 70% der Wechselrichtersollgleichspannung Udcpo_i1 begrenzt. Im Normalbetrieb ist die Gammaregelung 16 nicht aktiv, so dass der obere Begrenzungswert Udcpo_i1 gleichzeitig der Ausgangswert des Integrators 15 Udco_i1 ist. Sind jedoch Kommutierungsfehler aufgrund eines entsprechenden Messlöschwinkels γᵢ₁ zu erwarten, stellt der Gamma-PI-Regler 15 eine zweckmäßige Wechselrichtersollgleichspannung Udco_i1 ein, die über einen Funksender 19 an alle Gleichrichterregelungen 11 und an alle anderen Wechselrichterregelungen 12 gesendet wird. Jede Gleichrichterregelung 11 aber auch jede Wechselrichterregelung 12 weist einen Funkempfänger 20 zum Empfangen der gesendeten Wechselrichtersollgleichspannungen Udco_i2, ..., Ud-co_ii aller bzw. aller anderen Wechselrichter 8 auf. Die Wechselrichtersollgleichspannungen Udc_i1...Udc_ii werden von einer Minimalauswahleinheit 21 miteinander verglichen, wobei die Minimalauswahleinheit 21 den kleinsten Wechselrichtersollgleichspannungswert als Minimalgleichspannung Udco bestimmt. Die weitere. Regelung des Wechselrichters 8 aber auch des Gleichrichters 6 erfolgt nun auf Grundlage der allen Regelungen gemeinsamen Minimalspannung Udco.

So wird die Minimalgleichspannung Udco zur Umnormierung der Wechselrichtermessgleichspannung Udc_i1 verwendet. Dazu wird die Wechselrichtermessgleichspannung Udc_i1 und die Minimalgleichspannung Udco einem Divisor 22 zugeführt, der die Wechselrichtermessgleichspannung Udc_i1 durch die Minimalgleichspannung dividiert. Der Ausgang des Divisors 22 liegt an einem Negativeingang eines Addierers 17 an, an dessen zweiten Eingang eine -1 anliegt. Auf diese Weise wird eine Wechselrichterdifferenzgleichspannung du_i1 berechnet. Der Wechselrichterdifferenzgleichstrom di_i1 wird zu dem Wechselrichterdifferenzgleichstrom di_i1 mittels des Addierers 17 hinzu addiert.

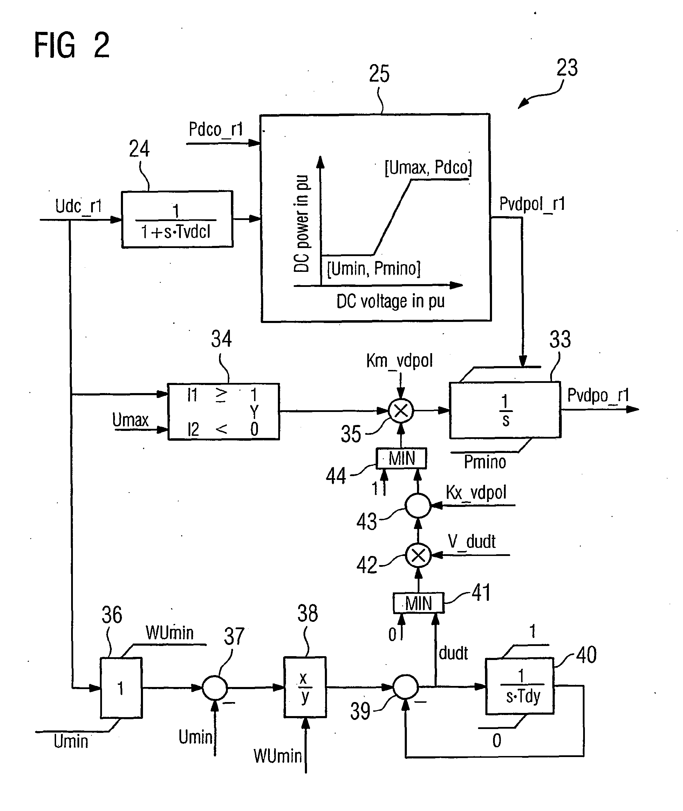

Im Folgenden wird die Ermittlung des Wechselrichterdifferenzgleichstromes di_i1 erläutert. So weist jede Wechselrichterregelung 12 aber auch jede Gleichrichterregelung 11 eine Begrenzungseinrichtung 23 auf, die eine Glättungseinheit 24 sowie einen Funktionsgeber 25 umfasst. Durch die Begrenzungseinheit 23 wird die ursprünglich geforderte Wechselrichtersollgleichleistung beziehungsweise Gleichrichtersollgleichleistung Pdco_i1 beziehungsweise Pdco_r1 in Abhängigkeit der gemessenen Wechselrichtermessgleichleistung Udc_i1 beziehungsweise Udc_r1 zu Pvdpo_i1 beziehungsweise Pvdpo_r1 herabgesetzt. Dies erfolgt zweckmäßigerweise nach einem Zusammenbruch der Gleichspannung im Fehlerfall, also beispielsweise bei einem Fehler in einem der Wechselspannungsnetze 4 oder aber innerhalb des Gleichstromnetz 7. Nach der Behebung des Fehlers wird zunächst die Gleichspannung der Gleichspannungsverbindung 7 erhöht, bevor die Sollgleichleistung auf den ursprünglichen Wert Pdco_i1 beziehungsweise Pdco_r1 hochgefahren wird. Auf die genaue Funktionsweise der Begrenzungseinrichtung 23 wird im Zusammenhang mit Figur 2 eingegangen. Im Normalbetrieb ist der Ausgang des Funktionsgebers 25 Pvdpo_i1 beziehungsweise Pvdpo_r1 gleich der vorgegebenen Wechselrichtersollgleichleistung Pdco_i1 beziehungsweise der Gleichrichtersollgleichleistung Pdco_r1.

Der Ausgang des Funktionsgebers 25 wird einem Divisor 26 zugeführt, welcher die jeweilige Sollgleichleistung durch die Minimalgleichspannung Udco unter Gewinnung,eines Wechselrichtersollgleichstromes Idco_i1 beziehungsweise eines Gleichrichtersollgleichstromes Idco_r1 dividiert. Anschließend werden der Wechselrichtermessgleichstrom Idc_i1 beziehungsweise der Gleichrichtermessgleichstrom Idc_r1 mittels des Divisors 22 umnormiert und anschließend mit Hilfe des Addierers 17 der Wechselrichterdifferenzgleichstrom di_i1 beziehungsweise der Gleichrichterdifferenzgleichstrom di_r1 ermittelt. Am Wechselrichter 8 wird die Wechselrichterdifferenzgleichspannung du_i1 von dem Wechselrichterdifferenzgleichstrom di_i1 abgezogen. Dies erfolgt gemäß der Gleichung di_i1 - du_i1 = 1 - x_Idc_i1 - 1 + x_Udc_r1, wobei x_Idc_i1 beziehungsweise x_Udc_i1 die umnormierten Messgrößen repräsentieren sollen. Die auf diese Weise gebildete Differenz soll möglichst minimal sein oder mit anderen Worten auf Null geregelt werden.
Aus diesem Zweck wird der Ausgang des Addierers 17 einem Wechselrichter-PI-Regler 27 zugeführt, der den Kosinus des Zündwinkels α an seinem Ausgang bestimmt. Dabei ist der Wechselrichter-PI-Regler 27 nach unten und nach oben auf einen maximalen Zündwinkel αmax beziehungsweise einem minimalen Zündwinkel αmin begrenzt. Dem Wechselrichter-PI-Regler 27 ist eine Arccosinuseinheit 28 nachgeschaltet, die den Arccosinus und somit den Zündwinkel α bestimmt und diesen einem Zündgenerator 29 zuführt, der in Abhängigkeit des übermittelten Zündwinkels α einen Zündimpuls für die Thyristoren 5 des Wechselrichters 8 bereitstellen.

Jede Gleichrichterregelung 11 ist im Wesentlichen der beschriebenen Wechselrichterregelung 12 entsprechend aufgebaut, jedoch verfügt die Gleichrichterregelung 11 über keinen Gammaregler 16, auch erzeugt die Gleichrichterregelung 11 selbstverständlich keine Wechselrichtersollgleichspannung, weist jedoch die besagte Minimalauswahleinheit 21 zur Bestimmung der Minimalgleichspannung Udco auf.

Wie die Wechselrichterregelung 12 verfügt auch die Gleichrichterregelung 11 über eine Begrenzungseinrichtung 23 sowie über eine Umnormierung mittels des Divisors 22. Allerdings wird durch den Addierer 17, welcher dem PI-Gleichspannungsregler 27 vorgeschaltet ist, nicht die Differenz zwischen dem Gleichrichterdifferenzstrom und der Gleichrichterdifferenzspannung sondern stattdessen die Summe aus dem Gleichrichterdifferenzstrom und der Gleichrichterdifferenzspannung und zwar nach der Umnormierung gemäß der Formel di_r1 + du_r1 = 1 - x_Idc_r1 + 1 - x_Idc_r1 gebildet.

Im Gegensatz zur Wechselrichterregelung 12 weist der Gleichrichter-PI-Regler 27 eine Maximalstrom- und/oder Maximalspannungsbegrenzung auf. Hierzu sind zwei Addierer 30 sowie eine Minimalauswahleinheit 31 und ein PI-Regler 32 vorgesehen. Der PI-Regler 32 wirkt über die obere Begrenzung des Gleichrichter-PI-Reglers 27. Die Addierer 30 addieren eine maximale Differenzspannungsabweichung du_xx1 sowie eine maximale Differenzstromabweichung di_xx1 der Differenzgleichspannung du_r1 beziehungsweise dem Differenzgleichstrom di_r1 jeweils hinzu. Überschreitet der Gleichrichtermessgleichstrom Idc_{_}r1 einen resultierenden Gleichrichtersollstromwert, der sich aus der Summe des Gleichrichtersollgleichstromes Idco_r1 und der maximalen Differenzstromabweichung di_xx1 berechnet, wird der Gleichrichtermessgleichstrom mit Hilfe des PI-Reglers 32 auf den resultierenden Gleichrichtersollstromwert reduziert. Auf entsprechende Weise wird die Gleichrichtermessgleichspannung Udc_r1 auf einen resultierenden Gleichrichtersollspannungswert herabgesetzt, der sich aus der Summe der Gleichrichtersollgleichspannung Udco_r1 und der maximalen Differenzspannungsabweichung du_xx1 ergibt. Durch die Minimalauswahleinheit 31 kommt die größte Abweichung zum Zuge. Dazu wird der Ausgang der Minimalauswahleinheit 31 dem PI-Regler 32 zugeführt, der an seinem Ausgang einen Cosinus eines Steuerwinkels zwischen cos α_{red_}r1 und cos α_{min_}r1 erzeugt. Der Ausgang des PI-Reglers 32 wird zur Begrenzung des PI-Reglers 27 der Gleichrichterregelung 11 nach oben verwendet. Typische Werte für den du_xxl und di_xx1 liegen zwischen 0,01 und 0,1. Die Begrenzung α_{red_}r variiert je nach Performance der HGÜ-Anlage zwischen 40° und 50°. Der minimale Löschwinkel des Gleichrichters α_{min_}r1 beträgt üblicherweise 5°.

Es sei an dieser Stelle noch einmal darauf hingewiesen, dass sich bei den zu addierenden Werten selbstverständlich um normierte Werte handelt. Mit anderen Worten sind die Messwerte auf so genannte Nennwerte vor der Umnormierung normiert.

Figur 2 verdeutlicht die Wirkung der Begrenzungseinrichtung 23 genauer am Beispiel eines Gleichrichters 6. So wird die Gleichrichtermessgleichspannung Udc_r1 der Glättungseinheit 24 zugeführt, um die bei einem Spannungseinbruch in einem der Wechselspannungsnetze 4 oder einem sonstigen Fehlerfall häufig auftretenden Spannungsschwankungen zu glätten und somit in verarbeitbare Gleichrichtermessgleichspannungen Udc_r1 umzuwandeln. Die geglättete Gleichrichtermessgleichspannung wird gemeinsam mit der auf den jeweiligen Nennwert normierten Gleichrichtersollgleichleistung Pdco_r1 dem Funktionsgeber 25 zugeführt. Der Funktionsgeber 25 erzeugt an seinem Ausgang eine normierte Fehlerfallbegrenzungsleistung Pvdpol_r1 anhand einer auf der Erfahrung des Designers des MT-HGÜ-Systems basierenden Kennlinie. Überschreitet die geglättete Gleichrichtermessgleichspannung Udc_r1 eine Maximalgleichspannung U-max_r1 als Schwellenwert, erzeugt der Funktionsgeber 25 an seinem Ausgang die an seinem Eingang anliegende Gleichrichtersollgleichleistung Pdco_r1.

Der Ausgang des Funktionsgebers 25 dient zur Maximalbegrenzung eines Integrators 33, wobei die minimale Ausgangsspannung des Integrators 33 Pmino ist. Ferner ist ein Grenzwertmelder 34 mit zwei Eingängen vorgesehen. An dem ersten Eingang des Grenzwertmelders 34 liegt die Gleichrichtermessgleichspannung Udc_r1 an. An dem zweiten Eingang wird die Maximalspannung Umax_r1 des Funktionsgebers 25 eingespeist. Der Grenzwertmelder 34 vergleicht die beiden Eingangswerte. Ist die Gleichrichtermessgleichspannung Udc_r1 größer als die Maximalspannung Umax_r1, wie dies üblicherweise im Nennbetrieb der Fall ist, wird der Ausgang Y des Grenzwertmelders 34 gleich Eins gesetzt. Sinkt die Gleichrichtermessgleichspannung Udc_r1 unter die maximale Spannung Umax_r1 ab, wird der Ausgang des Grenzwertmelders 34 hingegen gleich Null. Im Fehlerfall liegt daher eine Null als Faktor eines Multiplikators 35 vor, so dass der Integrator 33 in Abhängigkeit des Absinkens der Gleichrichtermessgleichspannung Udc_r1 an seinem Ausgang Werte, Pvdpo_r1, zwischen der minimalen Leistung Pmino und der maximalen Leistung Pdco_r1 erzeugt. Wie aus Figur 1 hervorgeht, wird in diesem Fall die Bestimmung des Gleichrichterdifferenzgleichstromes di_r1 auf Grundlage von pvdpo_r1 durchgeführt.

Nach der Fehlerbeseitigung steigt die Gleichrichtermessgleichspannung Udc_r1. Dies führt auf Grund der Kennlinie des Funktionsgebers 25 an dessen Ausgang zu einer Erhöhung von Pvdpol_r1. Der Ausgang des Integrators 33 verharrt jedoch zunächst auf dem tiefsten Wert Pvdpo_r1, der während des Fehlerfalles vorlag. Meldet jedoch der Vergleicher 34, dass die Gleichrichtermessgleichspannung Udc_r1 einen Schwellenwert Umax_r1 überschreitet, integriert der Integrator 33 auf den von dem Funktionsgeber 25 gelieferten.Wert Pvdpol_r1 hoch. Schließlich stimmen Pdpo_r1, Pvdpol_r1 und Pdco_r1 miteinander überein, so dass zum Normalbetrieb übergegangen wird.

Die restlichen in Figur 2 gezeigten Komponenten dienen der Verstellbarkeit der Integrationsgeschwindigkeit des Integrators 33 von Pmino bis zum Erreichen der Gleichrichtersollgleichleistung Pdco_r1. Zur Festlegung der Integrationsgeschwindigkeit ist zunächst ein Begrenzer 36 vorgesehen, der überprüft, ob die Gleichrichtermessgleichspannung Udc_r1 in den Bereich zwischen Umin und WUmin fällt. Liegt Udc_r1 unterhalb von Umin, liegt am Ausgäng des Vergleichers 36 Umin an, so dass am Ausgang des nachgeschalteten Addierers 37 der, an dessen negativem Eingang Umin anliegt, ein Nullsignal erzeugt wird. Der Divisor 38 erzeugt an seinem Ausgang daher ebenfalls ein Nullsignal, von dem vorherige Spannungswerte mittels des Addierers 39 abgezogen werden. Die vorherigen Spannungswerte zwischen 0 und 1 werden von der Glättungseinheit 40 erzeugt und liegen dem geschilderten Fall ebenfalls bei Null.

Liegt hingegen die Gleichrichtermessgleichspannung Udc_r1 zwischen den Begrenzungen Umin und WUmin, wird somit eine auf WUmin normierte Differenzspannung am Ausgang des Divisors 38 erzeugt. Hiervon werden vorhergehende geglättete Spannungswerte mittels des Addierers 39 abgezogen. Der am Ausgang des Addierers 39 erzeugte Wert dudt kann positiv oder negativ sein, je nach dem ob die Gleichrichtermessgleichspannung Udc_r1 ansteigt oder fällt. Durch eine anschließende Minimalauswahl 41 wird sichergestellt, dass nur negative dudt-Werte von der Minimalauswahl 41 weitergeleitet werden. Steigt die Gleichrichtermessspannung Udc_r1, ist das Produkt dudt positiv und die Minimalauswahl 41 gibt eine Null an den Multiplizierer 42 weiter, der diese mit dem vorbestimmten Parameter V_dudt multipliziert und das sich ergebende Produkt, in diesem Fall ebenfalls null, an den Addierer 43 weitergibt, der dieses dann mit dem ebenfalls vorbestimmten Parameter Kx_vdpol aufsummiert. Der Wert Kx_vdpol ist gleich oder größer als eins. Bei abfallender Spannung wird durch eine weitere Minimalauswahl 44 daher sichergestellt, dass ein Wert gleich eins an den Multiplizierer 35 weitergegeben wird, der diese eins mit Ausgang des Grenzwertmelders 34 und dem ebenfalls voreinstellbaren Parameter Km_vdpol multipliziert und schließlich dem Integrator 33 zur Verfügung stellt. Das Produkt Y x km_vdpol x 1 ist gleich Km_vdpol. Der Integrator 33 integriert mit einer eingestellten Normgeschwindigkeit.

Fällt die Gleichrichtermessgleichspannung Udc_r1 während des Integrationsvorganges auf Grund eines Fehlers oder auf Grund eines schwachen Netzes ist dudt hingegen negativ. Der dudt-Wert wird weitergegeben, mit V_dudt multipliziert und schließlich mittels des Addierers 43 mit Kx_vdpol aufsummiert, so dass an dem Ausgang des Addierers 43 ein Wert kleiner eins entsteht, der schließlich an den Multiplikator 35 weitergegeben wird. Der Integrator 33 erhöht daher mit der so bestimmten neuen Zeitkonstante die an seinem Ausgang liegende reduzierte Gleichrichtersollgleichleistung Pvdpo_r1 langsamer.

## Patentansprüche

1. Verfahren zum Regeln von wenigstens drei Stromrichtern (2), die als Gleichrichter (6) oder Wechselrichter (8) regelbar und über ein Gleichstromnetz (7) mit miteinander verbunden sind, im Bereich der Energieverteilung und -übertragung, bei dem
- an jedem Stromrichter (2) jeweils eine Messgleichspannung (Udc_r1 ... Udc_rr; Udc_i1, ... Udc_ii) und jeweils ein Messgleichstrom (Idc_r1, ..., Idc_rr; Idc_i1, ..., Idc_ii) gemessen und an eine Gleichrichterregelung (11) zur Regelung des jeweiligen Gleichrichters (6) oder an eine Wechselrichterregelung (12) zur Regelung eines jeweils zugeordneten Wechselrichters (8) übertragen werden,
- für jede Gleichrichterregelung (11) und für jede Wechselrichterregelung (12) eine jeweils zugeordnete Gleichrichtersollgleichleistung (Pdco_r1, ..., Pdco_rr) beziehungsweise Wechselrichtersollgleichleistung (Pdco_i1, ..., Pdco_ii) festgelegt wird, wobei die Summe aus allen Gleichrichtersollgleichleistungen (Pdco_r1, ..., Pdco_rr) und allen Wechselrichtersollgleichleistungen (Pdco_i1, ..., Pdco_ii) gleich Null ist,
**gekennzeichnet dadurch, dass**
- aus jeder Wechselrichtersollgleichleistung (Pdco_i1, ..., Pdco_i1) eine jeweils zugeordnete Wechselrichtersollgleichspannung (Udco_i1, ..., Udco_ii) bestimmt wird,
- die kleinste Wechselrichtersollgleichspannung (Udco_i1, ..., Udco_ii) aller am Gleichstromnetz (7) angeschlossener Wechselrichter (8) als Minimalgleichspannung (Udco) festgelegt wird,
- mittels der Minimalgleichspannung (Udco) aus jeder Gleichrichtersollgleichleistung (Pdco_r1; ..., Pdco_rr) und aus jeder Wechselrichtersollgleichleistung (Pdco_i1, ..., Pdco_ii) ein Gleichrichtersollgleichstrom (Idco_r1, ..., Idco_rr) beziehungsweise ein Wechselrichtersollgleichstrom (Idco_i1, ..., Idco_ii) berechnet werden,
- wobei jede Gleichrichterregelung (11) die Differenz zwischen der Minimalgleichspannung (Udco) und der jeweils empfangenen Gleichrichtermessgleichspannung (Udc_r1, ..., Udc_rr) unter Gewinnung einer Gleichrichterdifferenzgleichspannung (du_r1, ..., du_rr) und die Differenz zwischen dem jeweiligen Gleic.hrichtersollstrom (Idco_r1, ..., Idco_rr) und dem jeweils empfangenen Gleichrichtermessgleichstromes (Idc_r1, ..., Idc_rr) unter Gewinnung eines Gleichrichterdifferenzgleichstromes (di_r1, ...,di_rr) bildet und den zugeordneten Gleichrichter (6) so regelt, dass die Summe der Differenzgleichspannung (du_r1, ..., du_rr) und des Differenzgleichstroms (di_r1, ..., di_rr) minimal wird, und
- wobei jede Wechselrichterregelung (12) die Differenz zwischen der Minimalgleichspannung (Udco) und der jeweils empfangenen Wechselrichtermessgleichspannung (Udc_i1, ..., Udc_ii) unter Gewinnung einer Wechselrichterdifferenzgleichspannung (du_i1, ..., du_ii) und die Differenz zwischen dem jeweiligen Wechselrichtersollstrom (Idco_i1, ..., Idco_ii) und dem jeweils empfangenen Wechselrichtermessgleichstrom (Idc_i1, ..., Idc_ii) unter Gewinnung eines Wechselrichterdifferenzgleichstromes (di_i1, ...,di_ii) bildet und den jeweils zugeordneten Wechselrichter (8) so regelt, dass die Differenz zwischen dem Wechselrichterdifferenzgleichstrom (di_i1, ...,di_ii) und der Wechselrichterdifferenzgleichspannung (du_i1, ..., du_ii) minimal wird.

2. Verfahren nach Anspruch 1,
**dadurch gekennzeichnet, dass**
die Regelung jedes Gleichrichters (6) und jedes Wechselrichters (8) über den gesamten Arbeitbereich des Gleichrichters (6) beziehungsweise des Wechselrichters (8) hinweg sowohl auf der Grundlage des jeweils zugeordneten Gleichrichterdifferenzgleichstromes (di_r1, ...,di_rr) als auch auf der Grundlage der Gleichrichterdifferenzgleichspannung (du_r1, ..., du_rr) beziehungsweise auf der Grundlage des jeweils zugeordneten Wechselrichterdifferenzgleichstromes (di_i1, ...,di_ii) als auch auf der Grundlage der zugeordneten Wechselrichterdifferenzgleichspannung (du_i1, ..., du_ii) erfolgt.

3. Verfahren nach einem der vorhergehenden Ansprüche,
**dadurch gekennzeichnet, dass** die Stromrichter (2) unter Ausbildung einer Kurzkupplung räumlich nebeneinander aufgestellt sind.

4. Verfahren nach einem der Ansprüche 1 oder 2,
**dadurch gekennzeichnet, dass** die Stromrichter (2) unter Ausbildung eines Gleichstromübertragungssystems (1) wenigstens 1 Kilometer entfernt voneinander aufgestellt sind.

5. Verfahren nach einem der vorhergehenden Ansprüche,
**dadurch gekennzeiehnet, dass** jeder auf einen Nennstrom normierte Gleichrichtermessgleichstrom (Idc_r1, ..., Idc_rr) auf den jeweils zugeordneten ebenfalls auf den Nennstrom normierten Gleichrichtersollgleichstrom (Idco_r1, ..., Idco_rr), jeder auf den Nennstrom normierte Wechselrichtermessgleichstrom (Idc_i1, ..., Idc_ii) auf den jeweils zugeordneten, ebenfalls auf den Nennstrom normierten Wechselrichtersollgleichstrom (Idco_i1, ..., Idco_ii) umnormiert wird und sowohl jede auf die Nennspannung normierte Gleichrichtermessgleichspannung (Udc_r1, ..., Udc_rr) und jede auf die Nennspannung normierte Wechselrichtermessgleichspannung (Udc_i1, ..., Udc_ii) auf die Minimalspannung (Udco) umnormiert wird, wobei jeder Gleichrichterdifferenzgleichstrom (di_r1, ..., di_rr) und jeder Wechselrichterdifferenzgleichstrom (di_i1, ..., di_ii) als Differenz zwischen 1 und den auf diese Weise umnormierten jeweils zugeordneten Gleichrichtermessgleichstrom (Idc_r1, ..., Idc_rr) beziehungsweise Wechselrichtermessgleichstrom (Idc_i1, ..., Idc_ii) und die Gleichrichterdifferenzgleichspannung (du_r1, ..., du_rr) und die Wechselrichterdifferenzgleichspannung (du_i1, ..., du_ii) als Differenz zwischen 1 und der auf diese Weise umnormierten jeweils zugeordneten Gleichrichtermessgleichspannung (Udc_r1, ..., Udc_rr) beziehungsweise Wechselrichtermessgleichspannung (Udc_i1, ..., Udc_ii) berechnet wird.

6. Verfahren nach einem der vorhergehenden Ansprüche,
**dadurch gekennzeichnet, dass** an jedem Wechselrichter (8) ein Messlöschwinkel (γ_i1, ..., γ_ii) gemessen und an eine jeweils zugeordnete Gammaregelung (16) übertragen wird, wobei die Gammaregelung (16) den Messlöschwinkel (γ_i1, ..., γ_ii) mit einem dem Wechselrichter (8) zugeordneten Solllöschwinkel (γ0_i1, ..., γ0_ii), vergleicht und, wenn der jeweilige Messlöschwinkel (γ_i1, ..., γ_ii) den zugeordneten Solllöschwinkel (γ0_i1, ..., γ0_ii) unterschreitet, einen gegenüber der vorgegebenen Wechselrichtersollgleichspannung (Udcpo_il, ..., Udcpo_ii) herabgesetzte Wechselrichtergleichspannungssollwert (Udco_i1, ..., Udco_ii) erzeugt, wobei der herabgesetzte Wechselrichtergleichspannungssollwert (Udco_i1, ..., Udco_ii) an alle anderen Wechselrichterregelungen (12) und an alle Gleichrichterregelungen (11) übertragen und zur Bestimmung der Minimalgleichspannung (Udco) verwendet wird.

7. Verfahren nach einem der vorhergehenden Ansprüche,
**dadurch gekennzeichnet, dass** jede Gleichrichterregelung (11) einen Begrenzungsregler (32) aufweist, der einen Gleichrichterregler (27) dieser Gleichrichterregelung (11) nach oben begrenzt, so dass ein vorgegebener Maximalstrom und/oder eine vorgegebene Maximalspannung nicht überschritten werden.

8. Verfahren nach Anspruch 7,
**dadurch gekennzeichnet, dass** der Begrenzungsregler (32) den zugeordneten Gleichrichterregler (27) begrenzt, wenn der jeweils empfangene Gleichrichtermessgleichstrom (Idc_r1, ..., Idc_rr) größer ist als die Summe aus dem jeweiligen Gleichrichtersollgleichstrom (Idco_r1, ..., Idco_rr) und einer vorbestimmten dem Gleichrichter jeweils zugeordneten Differenzgleichstromabweichung (di_xxl_r1,..., di_xxl_rr) oder wenn die jeweils empfangene Gleichrichtermessgleichspannung (Udc_r1, ..., Udc_rr) größer ist als die Summe aus der Minimalgleichspannung (Udco) und einer vorbestimmten Differenzgleichspannungsabweichung (du_xxl_r1,..., du_xxl_rr).

9. Verfahren nach einem der vorhergehenden Ansprüche,
**dadurch gekennzeichnet, dass** bei abfallender Gleichrichtermessgleichspannung (Udc_r1, ..., Udc_rr) und/oder Wechselrichtermessgleichspannung (Udc_i1, ..., Udc_ii) die Gleichrichtersollgleichleistung (Pdco_r1, ..., Pdco_rr) beziehungsweise die Wechselrichtersollgleichleistung (Pdco_i1, ..., Pdco_ii) in Abhängigkeit der jeweiligen Gleichrichtermessgleichspannung (Udc_r1, ..., Udc_rr) beziehungsweise in Anhängigkeit der jeweiligen Wechselrichtermessgleichspannung (Udc_i1, ..., Udc_ii) auf einen kleineren Wert unter Gewinnung einer jeweils zugeordneten Fehlerfallsollgleichleistung (Pvdpo_r1, ..., Pvdpo_rr; Pvdpo_i1, ..., Pvdpo_ii) herabgesetzt wird, wobei der Gleichrichtersollgleichstrom (Idco_r1, ..., Idco_rr) beziehungsweise der Wechselrichtersollgleichstrom (Idco_i1, ..., Idco_ii) anstatt aus der Gleichrichtersollgleichleistung (Pdco_r1, ..., Pdco_rr) beziehungsweise Wechselrichtersollgleichleistung (Pdco_i1, ..., Pdco_ii) aus der jeweiligen Fehlerfallsollgleichleistung (Pvdpo_r1, ..., Pvdpo_rr; Pvdpo_i1, ..., Pvdpo_ii) bestimmt wird.

## Claims

1. Method for controlling at least three converters (2) which can be controlled as rectifiers (6) or inverters (8) and are connected to one another via a DC power supply system (7), in the field of power distribution and transmission,
in which
- a respective measured DC voltage (Udc_r1 ..., Udc_rr; Udc_i1, ..., Udc_ii) and a respective measured direct current (Idc_r1, ..., Idc_rr; Idc_i1, ..., Idc_ii) are measured at each converter (2) and are transmitted to a rectifier control system (11) in order to control the respective rectifier (6), or to an inverter control system (12) in order to control a respectively associated inverter (8),
- a respectively associated rectifier nominal DC power (Pdco_r1, ..., Pdco_rr) and a respective inverter nominal DC power (Pdco_i1, ..., Pdco_ii) are defined for each rectifier control system (11) and for each inverter control system (12), with the sum of all the rectifier nominal DC powers (Pdco_r1, ..., Pdco_rr) and all the inverter nominal DC powers (Pdco_i1, ..., Pdco_ii) being equal to zero,
**characterized in that**
- a respectively associated inverter nominal DC voltage (Udco_i1, ..., Udco_ii) is determined from each inverter nominal DC power (Pdco_i1, ..., Pdco_ii),
- the lowest inverter nominal DC voltage (Udco_i1, ..., Udco_ii) of all the inverters (8) which are connected to the DC power supply system (7) is defined as the minimum DC voltage (Udco),
- a rectifier nominal direct current (Idco_r1, ..., Idco_rr) and an inverter nominal direct current (Idco_i1, ..., Idco_ii) are respectively calculated by means of the minimum DC voltage (Udco) from each rectifier nominal DC power (Pdco_r1, ..., Pdco_rr) and from each inverter nominal DC power (Pdco_i1, ..., Pdco_ii),
- with each rectifier control system (11) forming the difference between the minimum DC voltage (Udco) and the respectively received rectifier measured DC voltage (Udc_r1, ..., Udc_rr), resulting in a rectifier difference DC voltage (du_r1, ..., du_rr), and forming the difference between the respective rectifier nominal current (Idco_r1, ..., Idco_rr) and the respectively received rectifier measured direct current (Idc_r1, ..., Idc_rr), resulting in a rectifier difference direct current (di_r1, ..., di_rr), and controlling the associated rectifier (6) such that the sum of the difference DC voltage (du_r1, ..., du_rr) and the difference direct current (di_r1, ..., di_rr) is minimized, and
- with each inverter control system (12) forming the difference between the minimum DC voltage (Udco) and the respectively received inverter measured DC voltage (Udc_i1,
..., Udc_ii), resulting in an inverter difference DC voltage (du_i1, ..., du_ii), and forming the difference between the respective inverter nominal current (Idco_i1, ..., Idco_ii) and the respectively received inverter measured direct current (Idc_i1, ..., Idc_ii), resulting in an inverter difference direct current (di_i1, ..., di_ii), and controlling the respectively associated inverter (8) such that the difference between the inverter difference direct current (di_i1, ..., di_ii) and the inverter difference DC voltage (du_i1, ..., du_ii) is minimized.

2. Method according to Claim 1, **characterized in that** each rectifier (6) and each inverter (8) is controlled over the entire operating range of the rectifier (6) and, respectively, of the inverter (8) both on the basis of the respectively associated rectifier difference direct current (di_r1, ..., di_rr) and on the basis of the rectifier difference DC voltage (du_r1, ..., du_rr) and, respectively, on the basis of the respectively associated inverter difference direct current (di_i1, ..., di_ii) and on the basis of the associated inverter difference DC voltage (du_i1, ..., du_ii).

3. Method according to one of the preceding claims, **characterized in that** the converters (2) are positioned physically alongside one another in order to form a back-to-back link.

4. Method according to one of Claims 1 or 2, **characterized in that** the converters (2) are positioned at least one kilometer away from one another in order to form a direct-current transmission system (1).

5. Method according to one of the preceding claims, **characterized in that** each rectifier measured in direct current (Idc_r1, ..., Idc_rr), which is normalized with respect to a rated current, is renormalized with respect to the respectively associated rectifier nominal direct current (Idco_r1, ..., Idco_rr), which is likewise normalized with respect to the rated current, each inverter measured direct current (Idc_i1, ..., Idc_ii) which has been normalized with respect to the rated current is renormalized with respect to the respectively associated inverter nominal direct current (Idco_i1, ..., Idco_ii), which has likewise been normalized with respect to the rated current, and both each rectifier measured DC voltage (Udc_r1 ..., Udc_rr) and each inverter measured DC voltage (Udc_i1, ..., Udc_ii) which have been normalized with respect to the rated voltage are renormalized with respect to the minimum voltage (Udco), with each rectifier difference direct current (di_r1, ..., di_rr) and each inverter difference direct current (di_i1, ..., di_ii) being calculated as the difference between unity and the respectively associated rectifier measured direct current (Idc_r1, ..., Idc_rr), which has been renormalized in this way, and the respective inverter measured direct current (Idc_i1, ..., Idc_ii), which has been renormalized in this way, and with the rectifier difference DC voltage (du_r1, ..., du_rr) and the inverter difference DC voltage (du_i1, ..., du_ii) being calculated as the difference between unity and the respectively associated rectifier measured DC voltage (Udc_r1 ..., Udc_rr), which has been renormalized in this way, and the respective inverter measured DC voltage (Udc_i1, ..., Udc_ii) which has been renormalized in this way.

6. Method according to one of the preceding claims, **characterized in that** a measured turn-off angle (γ_i1, ..., γ_ii) is measured at each inverter (8) and is transmitted to a respectively associated gamma control system (16), with the gamma control system (16) comparing the measured turn-off angle (γ_i1, ..., γ_ii) with a nominal turn-off angle (γ0_i1, ..., γ0_ii) associated with the inverter (8), and, if the respective measured turn-off angle (γ_i1, ..., γ_ii) is less than the associated nominal turn-off angle (γ0_i1, ..., γ0_ii), producing an inverter DC voltage nominal value (Udco_il, ..., Udco_ii) which is less than the predetermined inverter nominal DC voltage (Udcpo_i1, ..., Udcpo_ii), with the reduced inverter DC voltage nominal value (Udco_i1, ..., Udco_ii) being transmitted to all the other inverter control systems (12) and all the other rectifier control systems (11), and being used to determine the minimum DC voltage (Udco).

7. Method according to one of the preceding claims, **characterized in that** each rectifier control system (11) has a limiting regulator (32) which limits a rectifier regulator (27) in this rectifier control system (11) at the top such that a predetermined maximum current and/or a predetermined maximum voltage are/is not exceeded.

8. Method according to Claim 7, **characterized in that** the limiting regulator (32) limits the associated rectifier regulator (27) when the respectively received rectifier measured direct current (Idc_r1, ..., Idc_rr) is greater than the sum of the respective rectifier nominal direct current (Idco_r1, ..., Idco_rr) and a predetermined difference direct-current discrepancy (di_xxl_r1, ..., di_xx1_rr), which is in each case associated with the rectifier, or when the respectively received rectifier measured DC voltage (Udc_r1, ..., Udc_rr) is greater than the sum of the minimum DC voltage (Udco)and a predetermined difference DC voltage discrepancy (du_xx1_r1, ..., du_xx1_rr).

9. Method according to one of the preceding claims, **characterized in that** if the rectifier measured DC voltage (Udc_r1, ..., Udc_rr) and/or the inverter measured DC voltage (Udc_i1, ..., Udc_ii) are/is falling, the rectifier nominal DC power (Pdco_r1, ..., Pdco_rr) and/or the respective inverter nominal DC power (Pdco_i1, ..., Pdco_ii) are/is reduced as a function of the respective rectifier measured DC voltage (Udc_r1 ..., Udc_rr) and/or as a function of the respective inverter measured DC voltage (Udc_i1, ..., Udc_ii) to a lower value, resulting in a respectively associated fault nominal DC power (Pvdpo_r1, ..., Pvdpo_rr; Pvdpo_i1, ..., Pvdpo_ii), with the rectifier nominal direct current (Idco_r1 ..., Idco_rr) and/or respectively the inverter nominal direct current (Idco_i1 ..., Idco_ii) being determined from the respective fault nominal DC power (Pvdpo_r1 ..., Pvdpo_rr; Pvdpo_i1, ..., Pvdpo_ii) rather than from the rectifier nominal DC power (Pdco_r1, ..., Pdco_rr) and/or the respective inverter nominal DC power (Pdco_i1, ..., Pdco_ii).

## Revendications

1. Procédé de régulation d'au moins trois convertisseurs ( 2 ) qui peuvent être réglés en redresseur ( 6 ) ou en onduleur ( 8 ) et qui sont reliés entre eux par un réseau ( 7 ) de courant continu, dans le domaine de la distribution d'énergie et de la transmission d'énergie, dans lequel
- sur chaque convertisseur ( 2 ) on mesure respectivement une tension ( Udc_r1... Udc_rr ; Udc-il, ... Udc_ii ) continue de mesure et respectivement un courant ( Idc_r1, ..., Idc_rr ; Idc_il, ..., Idc_ii ) continu de mesure et on les transmet à une régulation ( 11 ) de redresseur pour la régulation du redresseur ( 6 ) respectif ou à une régulation ( 12 ) d'onduleur pour la régulation d'un onduleur ( 8 ) associé respectivement,
- on fixe pour chaque régulation ( 11 ) de redresseur et pour chaque régulation ( 12 ) d'onduleur, un puissance ( Pdco_r1, ..., Pdco_rr ) continue de consigne de redresseur associée respectivement ou une puissance ( Pdco_il, ..., Pdco_ii ) continue de consigne d'onduleur, la somme de toutes les puissances ( Pdco_r1, ..., Pdco_rr ) continues de consigne de redresseur et de toutes les puissances ( Pdco_i1, ..., Pdco_ii ) continues de consigne d'onduleur étant égale à zéro,
**caractérisé en ce que**
- on détermine, à partir de chaque puissance ( Pdco_i1, ..., Pdco_ii ) continue de consigne d'onduleur, une tension ( Udco_i1, ..., Udco_ii ) continue de consigne associée respectivement,
- on fixe, comme tension ( Udco ) continue minimum, la tension ( Udco_i1, ..., Udco_ii ) continue de consigne d'onduleur la plus basse de tous les onduleurs ( 8 ) raccordés au réseau ( 7 ) de courant continu,
- on calcule, au moyen de la tension ( Udco ) continue minimum, à partir de chaque puissance ( Pdco_r1, ..., Pdco_rr ) continue de consigne de redresseur et à partir de chaque puissance ( Pdco_i1, ..., Pdco_ii ) continu de consigne d'onduleur, un courant ( Idco_r1, ..., Idco_rr ) continue de consigne de redresseur ou un courant ( Idco_i1, ..., Idco_ii ) continu de consigne d'onduleur,
- dans lequel chaque régulation ( 11 ) de redresseur forme la différence entre la tension ( Udco ) continue minimum et la tension ( Udco_r1, ..., Udco_rr ) continue de mesure de redresseur reçue respectivement, en obtenant une tension ( du_r1, ..., du_rr ) continue de différence de redresseur, et la différence entre le courant ( Idco_r1, ..., Idco_rr ) de consigne de redresseur respective et le courant ( Idc_r1, ..., Idc_rr ) continu de mesure de redresseur reçu respectivement, en obtenant un courant ( di_r1, ..., di_rr ) continu de différence de redresseur, et règle le redresseur ( 6 ) associé, de manière à ce que la somme de la tension ( du_r1, ..., du_rr ) continue et de la différence du courant ( di_r1, ..., di_rr ) continu de différence soit minimum, et
- dans lequel chaque régulation ( 12 ) d'onduleur forme la différence entre la tension ( Udco ) continue minimum et la tension ( Udc_i1, ..., Udc_ii ) continue de mesure d'onduleur reçue respectivement, en obtenant une tension ( du_i1, ..., du_ii ) continue de différence d'onduleur, et la différence entre le courant ( Idco_i1, ..., Idco_ii ) de consigne d'onduleur respectif et le courant ( Idco_il, ..., Idco_ii ) continu de mesure d'onduleur reçu respectivement, en obtenant un courant ( di_il, ..., di_ii ) continu de différence d'onduleur, et règle l'onduleur ( 8 ) associé respectivement, de manière à ce que la différence entre le courant ( di_i1, ..., di_ii ) continue de différence d'onduleur et la tension ( du_i1, ..., du_ii ) continu de différence d'onduleur soit minimum.

2. Procédé suivant la revendication 1,
**caractérisé en ce que** la régulation de chaque redresseur ( 6 ) et de chaque onduleur ( 8 ) s'effectue sur toute la plage opératoire du redresseur ( 6 ) ou de l'onduleur ( 8 ), tant sur la base du courant ( di_r1, ..., di_rr ) continu de différence de redresseur qu'également sur la base de la tension ( du_r1, ..., du_rr ) continu de différence de redresseur ou que sur la base du courant ( di_il, ..., di_ii ) continu de différence d'onduleur associé respectivement que sur la base de la tension ( du_i1, ..., du_ii ) continue de différence d'onduleur associée.

3. Procédé suivant l'une des revendications précédentes,
**caractérisé en ce que** les convertisseurs ( 2 ) sont mis les uns à côté des autres dans l'espace en formant un couplage court.

4. Procédé suivant l'une des revendications 1 ou 2,
**caractérisé en ce que** les convertisseurs ( 2 ) sont mis à une distance les uns des autres d'au moins 1 kilomètre en formant un système ( 1 ) de transmission en courant continu.

5. Procédé suivant l'une des revendications précédentes,
**caractérisé en ce que** chaque courant ( Idc_r1, ..., Idc_rr ) continu de mesure de redresseur, normé sur un courant nominal, est renormé sur le courant ( Idco_r1, ..., Idco_rr ) continu de consigne de redresseur associé respectivement et également normé sur le courant nominal, chaque courant ( Idcil, ..., Idc_ii ) continu de mesure d'onduleur normé sur le courant nominal est renormé sur le courant ( idco_i1, ..., Idco_ii ) continu de consigne d'onduleur associé respectivement et normé également sur le courant nominal et de même chaque tension ( Udc_r1, ..., Udc_rr ) continue de mesure de redresseur, normé sur la tension nominale, et chaque tension ( Udc_i1, ..., Udc_ii ) continue de mesure d'onduleur, normée sur la tension nominale est renormée sur la tension ( Udco ) minimum, dans lequel chaque courant ( di_r1, ..., di_rr ) continu de différence de redresseur et chaque courant ( di_i1, ..., di_ii ) continu de différence d'onduleur est calculé sous la forme d'une différence entre 1 et le courant ( Idc_r1, ..., idc_rr ) continu de mesure de redresseur, associé respectivement et ainsi renormé, ou le courant ( Idc_i1, ..., Idc_ii ) continu de mesure d'onduleur, associé respectivement et ainsi renormé, et la tension ( du_r1, ..., du_rr ) continue de différence de redresseur et la tension ( du_i1, ..., du_ii ) continue de différence d'onduleur est calculée sous la forme de la différence entre 1 et la tension ( Udc_r1, ..., Udc_rr ) continue de mesure de redresseur, associée respectivement et ainsi renormé, ou la tension ( Udc_il, ..., Udc_ii ) continue de mesure d'onduleur, associée respectivement et ainsi renormée.

6. Procédé suivant l'une des revendications précédentes,
**caractérisé en ce que** l'on mesure sur chaque onduleur ( 8 ) un angle ( γ_i1, ..., γ_ii ) d'extinction de mesure et on le transmet à une régulation ( 16 ) de gamma associée respectivement, dans lequel la régulation ( 16 ) de gamma compare l'angle ( γ_i1, ..., γ_ii ) d'extinction de mesure à un angle ( γ0_il, ..., γ0_ii ) d'extinction de consigne associé à l'onduleur ( 8 ) et, si l'angle ( γ_il, ..., γ_ii ) d'extinction de mesure respectif est inférieur à l'angle ( γ0_il, ..., γ0_ii ) d'extinction de consigne associé, produit une valeur ( Udco_i1, ..., Udco_ii ) de consigne de tension continue d'onduleur abaissée par rapport à la tension ( Udcpo_i1, ..., Udcpo_ii ) continue de consigne d'onduleur prescrite, la valeur ( Udco_i1, ..., udco_ii ) de consigne de tension continue d'onduleur abaissée étant transmise à toutes les autres régulations ( 12 ) d'onduleur et à toutes les régulations ( 11 ) de redresseur et étant utilisée pour la détermination de la tension ( Udco ) continue minimum.

7. Procédé suivant l'une des revendications précédentes,
**caractérisé en ce que** chaque régulation ( 11 ) de redresseur comporte un régulateur ( 32 ) de limitation, qui limite vers le haut un régulateur ( 27 ) redresseur de cette régulation ( 11 ) de redresseur de manière à ce qu'un courant maximum prescrit et/ou une tension maximum prescrite ne soit pas dépassé.

8. Procédé suivant la revendication 7,
**caractérisé en ce que** le régulateur ( 32 ) de limitation limite le régulateur ( 27 ) de redresseur associé, lorsque le courant ( Idc_r1, ..., Idc_rr ) continu de mesure de redresseur reçu respectivement est plus grand que la somme composée du courant ( Idco_r1, ..., Idco_rr ) continu de consigne de redresseur respectif et d'un écart ( di_xx1_r1, ..., di_xx1_rr ) de courant continu de différence déterminé à l'avance et associé respectivement au redresseur ou lorsque la tension ( Udc_r1, ..., Udc_rr ) continue de mesure de redresseur associée respectivement est plus grande que la somme composée de la tension ( Udco ) continue minimum et d'un écart ( du_xx1_r1, ..., du_xx1_rr ) de tension continue de différence déterminé à l'avance.

9. Procédé suivant l'une des revendications précédentes,
**caractérisé en ce que**, lorsque la tension ( Udc_r1, ..., Udc_rr ) continue de mesure de redresseur s'abaisse et/ou lorsque la tension ( Udc_i1, ..., Udc_ii ) continue de mesure d'onduleur s'abaisse, on diminue la puissance ( Pdco_r1, ..., Pdco_rr ) continu de consigne de redresseur ou la puissance ( Pdco_i1, ..., Pdco_ii ) continue de consigne d'onduleur en fonction de la tension ( Udc_r1, ..., Udc_rr ) continue de mesure de redresseur ou en fonction de la tension ( Udc_i1, ..., Udc_ii ) continue de mesure d'onduleur respective jusqu'à une valeur plus petite, en obtenant une puissance ( Pvdpo_r1, ..., Pvdpo_rr ; Pvdpo_i1, ..., Pvdpo_ii ) continue de consigne en cas de défaut associée respectivement, le courant ( Idco_r1, ..., Idco_rr ) continu de consigne de redresseur ou le courant ( Idco_i1, ..., Idco_ii ) continu de consigne d'onduleur étant déterminé, au lieu de l'être à partir de la puissance ( Pdco_r1, ..., Pdco_rr ) continu de consigne de redresseur ou de la puissance ( Pdco_i1, ..., Pdco_ii ) continue de consigne d'onduleur, à partir de la puissance ( Pvdpo_r1, ..., Pvdpo_rr ; Pvdpo_i1, ..., Pvdpo_ii ) respective continue de consigne en cas de défaut.
